# EUROPÄISCHE PATENTSCHRIFT

(11) **EP 3 125 647 B1**
(45) Veröffentlichungstag und Bekanntmachung des Hinweises auf die Patenterteilung: **05.10.2022**
(21) Anmeldenummer: 16181029.6
(22) Anmeldetag: 25.07.2016
(51) Int. Cl.: H05B 45/10

(54) **DIMMEN VON BELEUCHTUNGSVORRICHTUNGEN**
DIMMING OF LIGHTING DEVICES
ATTENUATION DE DISPOSITIFS D'ECLAIRAGE

(30) Priorität: 31.07.2015 DE 102015214633
(43) Veröffentlichungstag der Anmeldung: 01.02.2017
(73) Patentinhaber: Siemens Schweiz AG, 8047 Zürich (CH)
(72) Erfinder: Stieglbauer, Walter, 93083 Obertraubling (DE)
(74) Vertreter: Maier, Daniel Oliver

(56) Entgegenhaltungen:
- EP-B1- 0 618 667
- EP-B1- 0 923 274
- WO-A1-2007/068040
- DE-A1-102004 028 990
- US-B2- 6 813 720

## Beschreibung

Die vorliegende Erfindung betrifft eine Dimmvorrichtung zur Leistungssteuerung einer wechselstrombetriebenen Beleuchtungsvorrichtung mit einer Steuereinrichtung zum Betreiben der Beleuchtungsvorrichtung mittels Phasenanschnittsteuerung, wobei die Steuereinrichtung einen bidirektionalen Schalter besitzt, der zwei Schalteinrichtungen aufweist, zum Anlegen einer Versorgungswechselspannung an die Beleuchtungsvorrichtung. Darüber hinaus betrifft die vorliegende Erfindung ein Verfahren zur Leistungssteuerung einer wechselstrombetriebenen Beleuchtungsvorrichtung.

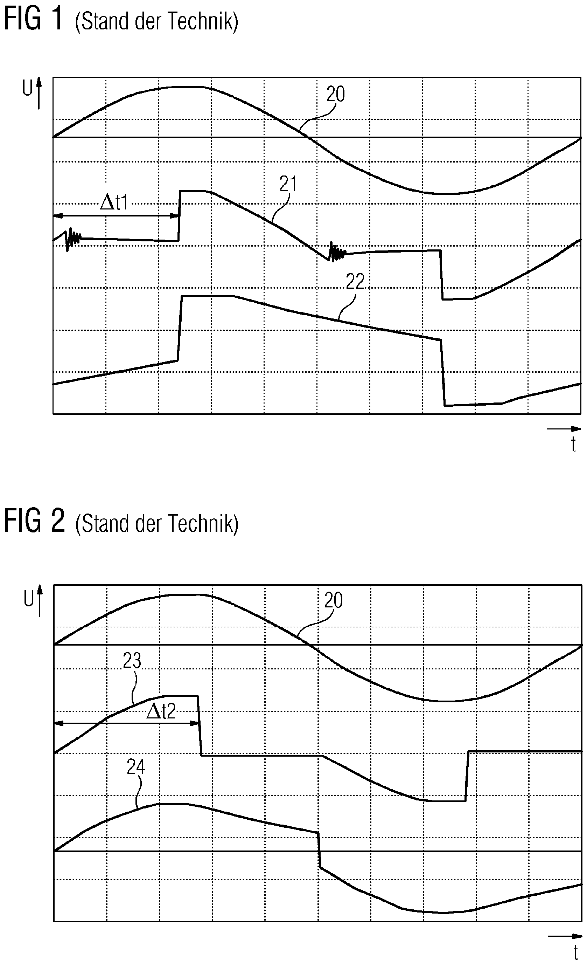

Dimmer beziehungsweise Dimmvorrichtungen dienen dazu, die Leistung einer Beleuchtungsvorrichtung zu variieren. Eine solche Leistungsvariation kann durch Phasenanschnittsteuerung oder Phasenabschnittsteuerung erfolgen. Bei der Phasenanschnittsteuerung (vergleiche FIG 1) wird der Strom verzögert nach dem Nulldurchgang der Wechselspannung eingeschaltet und fließt bis zum nächsten Nulldurchgang. Bei der Phasenabschnittsteuerung (vergleiche FIG 2) hingegen wird der Strom nach dem Nulldurchgang sofort eingeschaltet und vor dem nächsten Nulldurchgang wieder ausgeschaltet.

LED-Lampen als Beleuchtungsvorrichtungen sind meist mittels Phasenanschnitt oder Phasenabschnitt dimmbar. Mit sogenannten Universaldimmern ist sowohl der Phasenanschnitt als auch der Phasenabschnitt zum Dimmen solcher dimmbaren LED-Lampen (LED-Chip plus Vorschaltgerät) möglich. Abhängig von der Eingangskapazität und der internen Entladung des jeweiligen LED-Lampentyps verbleibt beim Dimmen an der Eingangskapazität der LED-Lampe eine elektrische Ladung, die, wenn sie nicht aktiv durch den Universaldimmer entladen wird, die Helligkeit der LED-Lampe beeinflusst. Messbar ist diese Ladung als Spannung an den Eingangsklemmen der LED-Lampe, die nur langsam durch interne Entladung aufgebaut wird. Die Folge dieses Effekts ist, dass die Eingangsspannung an der LED-Lampe und damit die Helligkeit der LED-Lampe höher ausfällt als es dem aktuellen Dimmwert entspricht. Die LED-Lampen lassen sich in solchen Fällen nur minimal abdimmen.

Die Effekte von Phasenabschnittbetrieb und Phasenanschnittbetrieb werden nun im Zusammenhang mit FIG 1 und FIG 2 ausführlicher erläutert. In FIG 1 ist eine Kurve 20 einer Netzspannung beziehungsweise Versorgungswechselspannung als Sinuswelle dargestellt. In jeder Netzhalbwelle wird die Last nach einer Verzögerungszeit Δt1 ab dem vorausgegangenen Stromnulldurchgang angesteuert. Bei einer Ohmschen Last ergibt sich gemäß der Kurve 21 von FIG 1 nach der Verzögerungszeit Δt1 ein unmittelbarer Anstieg der Spannung. Die Spannung ändert sich daraufhin entsprechend der Kurve 20 der Versorgungsspannung. Anders als bei der Ohmschen Last folgt die Eingangsspannung einer LED-Lampe gemäß Kurve 22 nach Überschreitung des Scheitelwerts nicht der Netzspannung. Die Spannung an der LED-Lampe sinkt aufgrund der geringen Entladung deutlich langsamer ab als die Versorgungsspannung.

FIG 2 zeigt den Effekt im Phasenabschnittbetrieb. Die oberste Kurve 20 zeigt wiederum die Versorgungsspannung. In jeder Halbwelle wird die Last im Netzspannungsnulldurchgang eingeschaltet und nach einer Verzögerung Δt2 wieder ausgeschaltet. Bei der Ohmschen Last gemäß Kurve 23 fällt die Spannung nach der Verzögerungszeit Δt2 sofort auf Null ab. Bei einer LED-Lampe hingegen sinkt die Spannung nach dem Abschalten gemäß Kurve 24 nur langsam ab.

Die vorliegende Erfindung beschränkt sich jedoch auf den Phasenanschnittbetrieb, da die Realisierung eines Phasenabschnittbetriebs sehr aufwendig wäre.

Der Phasenanschnittbetrieb wird in den Universaldimmern, die beide Betriebsarten beherrschen, zum Dimmen von induktiven Lasten eingesetzt, da der Phasenabschnittbetrieb die Abschaltung der Last im Stromnulldurchgang ermöglicht. Eine Abschaltung des Laststroms bei Werten ungleich Null erzeugt in jeder Netzhalbwelle hohe und eventuelle gefährliche Spannungsimpulse über dem Dimmer. Eine genaue Detektion des Stromnulldurchgangs ist eine wesentliche Voraussetzung für die Funktion des Phasenanschnittbetriebs beziehungsweise der Phasenanschnittsteuerung.

Die DE 10 2004 028 990 A1 offenbart eine Vorrichtung und ein Verfahren zum automatischen Anpassen eines Reglers an eine Last. Das Verfahren besteht darin, einen Regler im Phasenabschnittsmodus unter Spannung zu setzen und in den Phasenanschnittsmodus zu wechseln, wenn eine induktive Last detektiert wird. Anschließend wird ständig die Anpassung des aktiven Abschnittsmodus an die angeschlossene Last überprüft, wobei im Falle des Detektierens einer Veränderung der Lastart in den entgegengesetzten Modus gewechselt wird.

Auch die US 6 813 720 B2 ein System zur Leistungssteuerung, welches entweder in einem Phasenanschnittsmodus oder einem Phasenabschnittsmodus betrieben werden kann. Der Betriebsmodus des Systems wird in den Phasenanschnittsmodus gewechselt, wenn Überspannungen erfasst werden.

Herkömmliche einfache Dimmer besitzen meist eine Triac-Endstufe und arbeiten im Phasenanschnittbetrieb. Triacs schalten bidirektional und löschen im Stromnulldurchgang. Mit dem gezündeten Triac wird die Eingangsspannung der LED-Lampe auf den aktuellen Wert der Netzspannung geklemmt, sodass keine über der aktuellen Netzspannung liegende Spannung an der LED-Lampe verbleibt. Da ein Triac im stromlosen Zustand löscht, wird keine spezielle Schaltung für die Detektion des Stromnulldurchgangs erforderlich.

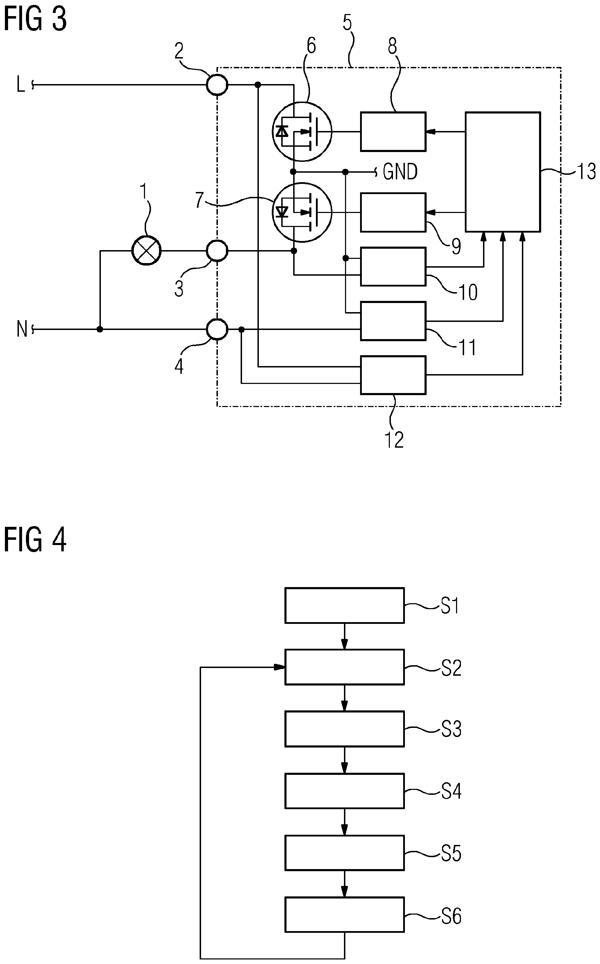

Darüber hinaus stehen die genannten Universaldimmer zur Verfügung, die bei antiseriell geschalteten Transistoren (meist MOSFET) beide MOSFET (vergleiche FIG 3: MOSFET 6 und 7) ansteuern und damit einen bidirektionalen Schalter bilden, der die Eingangsspannung der LED-Lampe an die aktuelle Netzspannung klemmt. MOSFETs löschen jedoch nicht wie Triacs im Stromnulldurchgang. Der Stromnulldurchgang muss bei diesen Dimmern beispielsweise aufwendig über eine Strommessung bestimmt werden.

Die Aufgabe der vorliegenden Erfindung besteht darin, auf einfache Weise den Stromnulldurchgang für Phasenanschnittsteuerung zuverlässig zu ermitteln.

Erfindungsgemäß wird diese Aufgabe gelöst durch eine Dimmvorrichtung zur Leistungssteuerung einer wechselstrombetriebenen Beleuchtungsvorrichtung mit
- einer Steuereinrichtung zum Betreiben der Beleuchtungsvorrichtung mittels Phasenanschnittsteuerung, wobei
- die Steuereinrichtung einen bidirektionalen Schalter besitzt, der zwei Schalteinrichtungen aufweist, zum Anlegen einer Versorgungswechselspannung an die Beleuchtungsvorrichtung, wobei
- die Steuereinrichtung ausgebildet ist zum gemeinsamen Einschalten der beiden Schalteinrichtungen in jeder Halbwelle der Versorgungswechselspannung und zum Abschalten einer der beiden Schalteinrichtungen vor einem zu erwartenden Stromnulldurchgang, wobei die Steuereinrichtung dazu ausgelegt ist, das Abschalten der einen Schalteinrichtung in Abhängigkeit von einem zuletzt bestimmten Stromnulldurchgang oder in Abhängigkeit von einem Spannungsnulldurchgang der Versorgungsspannung zu triggern,
- eine Messeinrichtung an die Steuereinrichtung angeschlossen ist zum Messen einer Spannung an der abgeschalteten Schalteinrichtung, und
- die Steuereinrichtung ausgebildet ist zum Bestimmen eines Stromnulldurchgangs für die Phasenanschnittsteuerung anhand der gemessenen Spannung.

Darüber hinaus wird erfindungsgemäß bereitgestellt ein Verfahren zur Leistungssteuerung einer wechselstrombetriebenen Beleuchtungsvorrichtung durch
- Anlegen einer Versorgungswechselspannung an die Beleuchtungsvorrichtung mittels eines bidirektionalen Schalters, der zwei Schalteinrichtungen aufweist, und
- Betreiben der Beleuchtungsvorrichtung mittels Phasenanschnittsteuerung,
- gemeinsames Einschalten der beiden Schalteinrichtungen in jeder Halbwelle der Versorgungswechselspannung und
- Abschalten einer der beiden Schalteinrichtungen vor einem zu erwartenden Stromnulldurchgang, wobei das Abschalten der einen Schalteinrichtung in Abhängigkeit von einem zuletzt bestimmten Stromnulldurchgang oder in Abhängigkeit von einem Spannungsnulldurchgang der Versorgungsspannung getriggert wird,
- Messen einer Spannung an der abgeschalteten Schalteinrichtung
- Bestimmen eines Stromnulldurchgangs für die Phasenanschnittsteuerung anhand der gemessenen Spannung.

Gemäß einer ersten Alternative ist die Steuereinrichtung dazu ausgelegt, das Ausschalten der einen Schalteinrichtung in Abhängigkeit von einem zuletzt bestimmten Stromnulldurchgang zu triggern. Es lässt sich so exakt der Stromnulldurchgang als Basis für das Abschalten nutzen.

Alternativ oder zusätzlich ist die Steuereinrichtung dazu ausgelegt, das Abschalten der einen Schalteinrichtung in Abhängigkeit von einem Spannungsnulldurchgang der Versorgungsspannung zu triggern. Es wird für die Bestimmung des Stromnulldurchgangs dann näherungsweise der Spannungsnulldurchgang der Versorgungsspannung gewählt, was eine sehr sinnvolle Näherung darstellt.

In vorteilhafter Weise wird also bei der Phasenanschnittsteuerung zunächst jede der Schalteinrichtungen eingeschaltet. Dadurch liegt an der Last beziehungsweise der Beleuchtungsvorrichtung die Versorgungsspannung an. Wegen des bidirektionalen Charakters folgt die Spannung an der Beleuchtungsvorrichtung (z.B. einer LED-Lampe) der Versorgungsspannung. Durch die entsprechende zusätzliche Entladung wird der Stromnulldurchgang auch etwa am Ende der Halbwelle der Versorgungsspannung erreicht. Ein Dimmen der Beleuchtungsvorrichtung ist damit in einem weiten Bereich möglich. Um nun den Stromnulldurchgang genau zu bestimmen, wird die Spannung an einem Bauelement im Lastzweig bestimmt. Hierzu eignet sich einer der Schalter, der vor einem zu erwartenden Stromnulldurchgang abgeschaltet wird. Die an der abgeschalteten Schalteinrichtung gemessene Spannung eignet sich nun zur Bestimmung des Stromnulldurchgangs, bei dem wieder geschaltet werden soll. Durch dieses Schalten im Stromnulldurchgang werden keine Überspannungen an den Bauelementen der Dimmvorrichtung erzeugt und es kommt auch nicht zu hohen Funkstörungen.

Vorzugsweise besitzt die Dimmvorrichtung eine Außenleiterklemme und eine Neutralleiterklemme als Eingang für die Versorgungsspannung sowie eine Lastklemme zum Anschluss der Beleuchtungseinrichtung, wobei die Neutralleiterklemme einen weiteren Anschluss für die Beleuchtungseinrichtung darstellt. Die Dimmvorrichtung besitzt damit neben einem Versorgungspfad auch einen steuerbaren Lastpfad.

Entsprechend einer Weiterbildung sind die beiden Schalteinrichtungen seriell zwischen die Außenleiterklemme und die Lastklemme geschaltet. In dem Lastpfad befinden sich also in Serie die Schalteinrichtungen mit der Last beziehungsweise Beleuchtungseinrichtung. Damit ist der Strom durch die Last variierbar, wodurch sich eine Leistungssteuerung realisieren lässt.

Jede der Schalteinrichtungen kann einen Feldeffekttransistor aufweisen, wobei die beiden Feldeffekttransistoren vorzugsweise antiseriell geschaltet sind. Damit ergibt sich ein bidirektionaler Schalter, mit dem es möglich ist, eine vollständige Wechselspannung an die Beleuchtungseinrichtung anzulegen.

In einer Variante kann die Messeinrichtung die Spannung an der Drain-Source-Strecke zumindest eines der beiden Feldeffekttransistoren abgreifen. Im Sperrzustand des Feldeffekttransistors entspricht die Spannung dann der Sperrspannung.

Alternativ kann die Messeinrichtung dann die Spannung, die zur Bestimmung des Stromnulldurchgangs dient, zwischen einem Mittenabgriff der beiden Schalteinrichtungen und der Neutralleiterklemme abgreifen. Auch diese Spannung beinhaltet die Spannung an der Beleuchtungseinrichtung, sodass daraus der Stromnulldurchgang ermittelt werden kann.

Speziell kann die Beleuchtungsvorrichtung eine LED-Lampe umfassen, die an die Dimmvorrichtung angeschlossen ist. Damit kann die Phasenanschnittsteuerung für das Dimmen von LED-Lampen mit hoher Effektivität eingesetzt werden.

Die vorliegende Erfindung wird anhand der beigefügten Zeichnungen näher erläutert, in denen zeigen:
- FIG 1: einen Phasenanschnittbetrieb gemäß dem Stand der Technik;
- FIG 2: einen Phasenabschnittbetrieb nach dem Stand der Technik;
- FIG 3: ein Prinzipschaltbild einer erfindungsgemäßen Dimmvorrichtung mit Beleuchtungsvorrichtung; und
- FIG 4: ein schematisches Diagramm eines erfindungsgemäßen Verfahrens zur Leistungssteuerung einer wechselstrombetriebenen Beleuchtungsvorrichtung.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in den geschilderten Kombinationen, sondern auch in Alleinstellung oder in anderen technisch sinnvollen Kombinationen realisiert werden können.

Eine beispielhafte Dimmvorrichtung 5 zur Leistungssteuerung einer wechselstrombetriebenen Beleuchtungsvorrichtung 1 ist in FIG 3 dargestellt. Die Dimmvorrichtung 5 besitzt eine Außenleiterklemme 2 zum Anschluss an einen Außenleiter L eines Wechselspannungssystems. Darüber hinaus besitzt die Dimmvorrichtung 5 eine Neutralleiterklemme 4, mit der sie hier an einen Neutralleiter N des Wechselspannungssystems angeschlossen ist beziehungsweise sein kann. Zwischen dem Außenleiter L und dem Neutralleiter N liegt eine Versorgungsspannung, z.B. eine Netzspannung an.

Die Dimmvorrichtung 5 verfügt darüber hinaus über eine Lastklemme 3, an der die Last beziehungsweise Beleuchtungsvorrichtung 1 angeklemmt werden kann. Ein anderer Pol der Beleuchtungsvorrichtung 1 ist mit dem Neutralleiter N beziehungsweise der Neutralleiterklemme 4 verbunden.

Die Dimmvorrichtung 5 besitzt im Wesentlichen eine Steuereinrichtung beispielsweise mit den Komponenten 6, 7, 8, 9 und 13 von FIG 3 und einer Messeinrichtung mit den Komponenten 10, 11 und/oder 12. Im konkreten Beispiel besitzt die Steuereinrichtung zwei Schalteinrichtungen, die hier jeweils als MOSFETs realisiert sein können. Die beiden MOSFETs sind hier antiseriell geschaltet und ihr Mittenabgriff ist jeweils mit der Source-Klemme verbunden. Der Mittenabgriff bildet die Masse GND für die elektrische Schaltung der Dimmvorrichtung 5. Die MOSFETs besitzen eine integrierte parasitäre Diode jeweils parallel zur Drain-Source-Strecke. Diese beiden parasitären Dioden sind mit ihrer jeweiligen Anode zu dem Mittenabgriff der beiden MOSFETs beziehungsweise zur Masse GND gerichtet.

Das Gate des MOSFET der Schalteinrichtung 6 wird von einem Treiber 8 gesteuert, der selbst beispielsweise von einer Ansteuerschaltung 13 beziehungsweise einem Mikrocontroller gesteuert werden kann. In gleicher Weise wird das Gate des MOSFET der zweiten Schalteinrichtung 7 von einem Treiber 9 gesteuert, welcher seinerseits wiederum von der Ansteuerschaltung 13 angesteuert wird.

In einer Ausführungsform ist ein Stromnulldurchgangsdetektor 10 an die Drain-Source-Strecke des MOSFET der zweiten Schalteinrichtung 7, d.h. zwischen Masse GND und Lastklemme 3, geschaltet. Ein solcher Stromnulldurchgangsdetektor 10 detektiert beispielsweise den Stromnulldurchgang einer positiven Halbwelle. Sein Mess- beziehungsweise Detektionsergebnis liefert er an die Ansteuerschaltung 13. Der Stromnulldurchgang der negativen Halbwelle wird entweder durch die Ansteuerschaltung 13 aus den vorangegangenen Stromnulldurchgängen errechnet oder er wird mit einem zusätzlichen, nicht eingezeichneten Stromnulldurchgangsdetektor zwischen dem Drain- und Sourceanschluss des MOSFET 6 detektiert und das Detektionsergebnis ebenfalls an die Ansteuerschaltung 13 geliefert.

Gemäß einer ersten Option kann ein Detektor 11 für die Detektion eines Netzspannungsnulldurchgangs vorgesehen sein. Dieser detektiert einen Spannungsnulldurchgang zwischen Neutralleiter N und Masse GND. Dazu ist er beispielsweise an den Mittenabgriff der beiden Schalteinrichtungen 6 und 7 sowie die Neutralleiterklemme 4 geklemmt.

Gemäß einer zweiten Option ist ein Detektor 12 zur Detektion eines Netzspannungsnulldurchgangs zwischen Außenleiter L und Neutralleiter N geschaltet. Speziell kann er an die Außenleiterklemme 2 und die Neutralleiterklemme 4 angeschlossen sein. Die beiden Detektoren 11 und 12 liefern ihre Messergebnisse ebenfalls an die Ansteuerschaltung 13.

Nachfolgend wird der Betrieb der Dimmvorrichtung im Einzelnen erläutert, wobei als Beleuchtungsvorrichtung 1 beispielsweise eine LED-Lampe verwendet wird. Die Dimmvorrichtung ist beispielsweise als Universaldimmer, mit dem Phasenanschnitt und Phasenabschnitt möglich sind, realisiert. Der Universaldimmer wird in den Phasenanschnittbetrieb gesetzt. Die antiseriell geschalteten MOSFETs 6 und 7 werden beim Dimmen in jeder Halbwelle gemeinsam eingeschaltet. Dadurch bilden sie einen bidirektionalen Schalter, der die Eingangsspannung der LED-Lampe 1 an die aktuelle Netzspannung klemmt. Um eine einfache Detektion der Stromnulldurchgänge, die auf dem Auftreten einer jeweiligen Sperrspannung an dem invers betriebenen Transistor basieren, zu ermöglichen, wird der invers betriebene MOSFET vor dem zu erwartenden Stromnulldurchgang ausgeschaltet. Der Strom im invers betriebenen MOSFET fließt dann bis zum Stromnulldurchgang über die integrierte parasitäre Diode weiter. Nach dem Stromnulldurchgang kann der Strom wegen des gesperrten, invers betriebenen MOSFET nicht mit entgegengesetzter Polarität weiterfließen. Über den gesperrten MOSFET entsteht ab dem Zeitpunkt des Stromnulldurchgangs bis zum erneuten Einschalten eine Sperrspannung, die mit einer einfachen Schaltung detektierbar ist.

In der positiven Halbwelle der Netz- beziehungsweise Versorgungsspannung werden zunächst die beiden antiseriell geschalteten MOSFETs 6 und 7 eingeschaltet. Der Strom fließt vom Außenleiter L über die MOSFETs 6 und 7 und die Last beziehungsweise Beleuchtungsvorrichtung 1 zum Neutralleiter N. Kurz vor dem zu erwartenden Stromnulldurchgang wird der MOSFET 7 ausgeschaltet. Der Strom fließt bis zum Nulldurchgang über MOSFET 6 und die parasitäre Diode von MOSFET 7 weiter. Unmittelbar nach dem Stromnulldurchgang entsteht eine Sperrspannung über dem MOSFET 7, die mit Hilfe einer einfachen Schaltung 10 detektiert werden kann.

Die Abschaltung des invers betriebenen MOSFET vor dem zu erwartenden Stromnulldurchgang kann auf zwei verschiedene Arten realisiert werden. In einer ersten Variante erfolgt eine Abschaltung nach einer Zeitverzögerung Δt1 (vergleiche FIG 1) beispielsweise getriggert ab dem zuletzt detektierten Stromnulldurchgang, welcher durch den Detektor 10 erfasst wurde. Die Zeitverzögerung Δt1 sollte minimal unter der halben Periodendauer eingestellt sein und wird sinnvollerweise durch den Mikrocontroller beziehungsweise die Ansteuerschaltung 13 gesteuert. Dadurch kann sie entsprechend variabel gehalten werden.

Gemäß einer zweiten Variante erfolgt die Abschaltung des invers betriebenen MOSFET im Nulldurchgang der Versorgungsspannung beziehungsweise der Netzspannung. Die Information über den Zeitpunkt des Netzspannungsnulldurchgangs wird mittels einer einfachen elektronischen Schaltung zur Verfügung gestellt. Bei dieser elektronischen Schaltung kann es sich beispielsweise um den Detektor 11 handeln, der zwischen dem Neutralleiter N und der Masse GND der Schaltung liegt. Alternativ kann die elektronische Schaltung der Detektor 12 sein, der zwischen dem Außenleiter L und dem Neutralleiter N angeordnet ist.

FIG 4 zeigt das erfindungsgemäße Verfahren in seinen Verfahrensschritten. Dabei erfolgt eine Leistungssteuerung einer wechselstrombetriebenen Beleuchtungsvorrichtung wie etwa einer LED-Lampe. Das Verfahren ist mit der Schaltung von FIG 3 realisierbar. In einem ersten Verfahrensschritt S1 (die Reihenfolge der Verfahrensschritte ist nicht von Belang) erfolgt ein Anlegen einer Versorgungswechselspannung (z.B. Netzspannung) an die Beleuchtungsvorrichtung 1 mittels eines bidirektionalen Schalters, der zwei Schalteinrichtungen 6, 7 aufweist. Gemäß einem zweiten Schritt S2 wird die Beleuchtungsvorrichtung 1 mittels Phasenanschnittsteuerung betrieben. In einem Schritt S3 erfolgt ein gemeinsames Einschalten der beiden Schalteinrichtungen 6, 7 in jeder Halbwelle der Versorgungswechselspannung. Der Schritt S4 entspricht einem Abschalten einer der beiden Schalteinrichtungen 6, 7 vor einem zu erwartenden Stromnulldurchgang. In Schritt S5 wird ein Messen einer Spannung an der abgeschalteten Schalteinrichtung durchgeführt. Schließlich erfolgt in Schritt S6 ein Bestimmen eines Stromnulldurchgangs für die Phasenanschnittsteuerung anhand der gemessenen Spannung. Der bestimmte Stromnulldurchgang wird dann wieder für die Phasenanschnittsteuerung gemäß Schritt S2 verwendet.

In vorteilhafter Weise können Universaldimmer gemäß dem obigen Aufbau beispielsweise LED-Lampen durch bidirektionale Ansteuerung im Phasenanschnittbetrieb im gesamten möglichen Bereich dimmen. Die Abschaltung des invers betriebenen MOSFET kurz vor dem Stromnulldurchgang ermöglicht eine einfache und exakte Detektion des Stromnulldurchgangs. Die Abschaltung der MOSFETs im Stromnulldurchgang ist die Voraussetzung für einen störarmen Betrieb von induktiven Lasten.

### Bezugszeichenliste

- 1: Beleuchtungsvorrichtung
- 2: Außenleiterklemme
- 3: Lastklemme
- 4: Neutralleiterklemme
- 5: Dimmvorrichtung
- 6: Schalteinrichtung
- 7: Schalteinrichtung
- 8: Treiber
- 9: Treiber
- 10: Stromnulldurchgangsdetektor
- 11: Detektor
- 12: Detektor
- 13: Ansteuerschaltung
- S1-S6: Verfahrensschritte

## Patentansprüche

1. Dimmvorrichtung zur Leistungssteuerung einer wechselstrombetriebenen Beleuchtungsvorrichtung mit
- einer Steuereinrichtung (6 bis 9 und 13) zum Betreiben der Beleuchtungsvorrichtung (1) mittels Phasenanschnittsteuerung, wobei
- die Steuereinrichtung (6 bis 9 und 13) einen bidirektionalen Schalter besitzt, der zwei Schalteinrichtungen (6, 7) aufweist, zum Anlegen einer Versorgungswechselspannung an die Beleuchtungsvorrichtung (1), wobei
- die Steuereinrichtung (6 bis 9 und 13) ausgebildet ist zum gemeinsamen Einschalten der beiden Schalteinrichtungen (6, 7) in jeder Halbwelle der Versorgungswechselspannung,
**dadurch gekennzeichnet, dass**
- die Steuereinrichtung (6 bis 9 und 13) ausgebildet ist zum Abschalten einer der beiden Schalteinrichtungen (6, 7) vor einem zu erwartenden Stromnulldurchgang, wobei die Steuereinrichtung (6 bis 9 und 13) dazu ausgelegt ist, das Abschalten der einen Schalteinrichtung (6, 7) in Abhängigkeit von einem zuletzt bestimmten Stromnulldurchgang oder in Abhängigkeit von einem Spannungsnulldurchgang der Versorgungsspannung zu triggern,
- eine Messeinrichtung (10 bis 12) an die Steuereinrichtung (6 bis 9 und 13) angeschlossen ist zum Messen einer Spannung an der abgeschalteten Schalteinrichtung, und
- die Steuereinrichtung (6 bis 9 und 13) ausgebildet ist zum Bestimmen eines Stromnulldurchgangs für die Phasenanschnittsteuerung anhand der gemessenen Spannung.

2. Dimmvorrichtung nach Anspruch 1, die eine Außenleiterklemme (2) und eine Neutralleiterklemme (4) als Eingang für die Versorgungsspannung sowie eine Lastklemme (3) zum Anschluss der Beleuchtungseinrichtung (1) aufweist, wobei die Neutralleiterklemme (4) einen weiteren Anschluss für die Beleuchtungseinrichtung (1) darstellt.

3. Dimmvorrichtung nach Anspruch 2, wobei die beiden Schalteinrichtungen (6, 7) seriell zwischen die Außenleiterklemme (2) und die Lastklemme (3) geschaltet sind.

4. Dimmvorrichtung nach einem der vorhergehenden Ansprüche, wobei jede der Schalteinrichtungen (6, 7) einen Feldeffekttransistor aufweist, und die beiden Feldeffekttransistoren antiseriell geschaltet sind.

5. Dimmvorrichtung nach Anspruch 4, wobei die Messeinrichtung (10 bis 12) die Spannung an der Drain-Source-Strecke zumindest eines der beiden Feldeffekttransistoren abgreift.

6. Dimmvorrichtung nach einem der Ansprüche 2 bis 4, wobei die Messeinrichtung (10 bis 12) die Spannung zwischen einem Mittenabgriff der beiden Schalteinrichtungen (6, 7) und der Neutralleiterklemme (4) abgreift.

7. Dimmvorrichtung nach einem der vorhergehenden Ansprüche, wobei die Beleuchtungsvorrichtung (1) eine LED-Lampe umfasst, die an die Dimmvorrichtung anschließbar ist.

8. Verfahren zur Leistungssteuerung einer wechselstrombetriebenen Beleuchtungsvorrichtung (1) durch
- Anlegen einer Versorgungswechselspannung an die Beleuchtungsvorrichtung (1) mittels eines bidirektionalen Schalters, der zwei Schalteinrichtungen (6, 7) aufweist,
- Betreiben der Beleuchtungsvorrichtung (1) mittels
- gemeinsames Einschalten der beiden Schalteinrichtungen (6, 7) in jeder Halbwelle der Versorgungswechselspannung **gekennzeichnet durch**
- Abschalten einer der beiden Schalteinrichtungen (6, 7) vor einem zu erwartenden Stromnulldurchgang, wobei das Abschalten der einen Schalteinrichtung (6, 7) in Abhängigkeit von einem zuletzt bestimmten Stromnulldurchgang oder in Abhängigkeit von einem Spannungsnulldurchgang der Versorgungsspannung getriggert wird,
- Messen einer Spannung an der abgeschalteten Schalteinrichtung (6, 7) und
- Bestimmen eines Stromnulldurchgangs für die Phasenanschnittsteuerung anhand der gemessenen Spannung.

## Claims

1. Dimming apparatus for controlling the output of an alternating current-operated lighting apparatus with
- a control facility (6 to 9 and 13) for operating the lighting apparatus (1) by means of phase angle control, wherein
- the control facility (6 to 9 and 13) possesses a bidirectional switch, which has two switching facilities (6, 7), for applying a supply alternating voltage to the lighting apparatus (1), wherein
- the control facility (6 to 9 and 13) is embodied to switch on the two switching facilities (6, 7) together on every half-wave of the supply alternating voltage,
**characterised in that**
- the control facility (6 to 9 and 13) is embodied to switch off one of the two switching facilities (6, 7) before an anticipated current zero crossing, wherein the control facility (6 to 9 and 13) is designed to trigger the switching off of the one switching facility (6, 7) as a function of a most recently determined current zero crossing or as a function of a voltage zero crossing of the supply voltage,
- a measurement facility (10 to 12) is connected to the control facility (6 to 9 and 13) to measure a voltage at the switched-off switching facility, and
- the control facility (6 to 9 and 13) is embodied to determine a current zero crossing for the phase angle control on the basis of the measured voltage.

2. Dimming apparatus according to claim 1, which has a line conductor terminal (2) and a neutral conductor terminal (4) as input for the supply voltage as well as a load terminal (3) for connecting the lighting facility (1), wherein the neutral conductor terminal (4) represents a further connection for the lighting facility (1).

3. Dimming apparatus according to claim 2, wherein the two switching facilities (6, 7) are connected in series between the line conductor terminal (2) and the load terminal (3).

4. Dimming apparatus according to one of the preceding claims, wherein each of the switching facilities (6, 7) has a field effect transistor, and the two field effect transistors are connected in anti-series.

5. Dimming apparatus according to claim 4, wherein the measurement facility (10 to 12) taps the voltage at the drain-source path of at least one of the two field effect transistors.

6. Dimming apparatus according to one of claims 2 to 4, wherein the measurement facility (10 to 12) taps the voltage between a centre tap of the two switching facilities (6, 7) and the neutral conductor terminal (4).

7. Dimming apparatus according to one of the preceding claims, wherein the lighting apparatus (1) comprises an LED light, which can be connected to the dimming apparatus.

8. Method for controlling the output of an alternating current-operated lighting apparatus (1) by
- applying a supply alternating voltage to the lighting apparatus (1) by means of a bidirectional switch, which has two switching facilities (6, 7),
- operating the lighting apparatus (1) by means of
- switching on the two switching facilities (6, 7) together on every half-wave of the supply alternating voltage,
**characterised by**
- switching off one of the two switching facilities (6, 7) before an anticipated current zero crossing, wherein the switching off of the one switching facility (6, 7) is triggered as a function of a most recently determined current zero crossing or as a function of a voltage zero crossing of the supply voltage,
- measuring a voltage at the switched-off switching facility (6, 7) and
- determining a current zero crossing for the phase angle control on the basis of the measured voltage.

## Revendications

1. Dispositif d'atténuation pour commander la puissance d'un dispositif d'éclairage alimenté en courant alternatif avec
- un dispositif de commande (6 à 9 et 13) pour actionner le dispositif d'éclairage (1) au moyen d'une commande à coupure de phase, dans lequel
- le dispositif de commande (6 à 9 et 13) possède un commutateur bidirectionnel, qui présente deux dispositifs de commutation (6, 7), pour l'application d'une tension d'alimentation alternative au dispositif d'éclairage (1), dans lequel
- le dispositif de commande (6 à 9 et 13) est conçu pour la mise sous tension commune des deux dispositifs de commutation (6, 7) dans chaque demi-onde de la tension d'alimentation alternative, **caractérisé en ce que**
- le dispositif de commande (6 à 9 et 13) est conçu pour la mise hors tension d'un des deux dispositifs de commutation (6, 7) avant un passage escompté par zéro du courant, dans lequel le dispositif de commande (6 à 9 et 13) est adapté pour déclencher la mise hors tension du un dispositif de commutation (6, 7) en fonction d'un passage par zéro du courant déterminé en dernier ou en fonction d'un passage de tension par zéro de la tension d'alimentation,
- un dispositif de mesure (10 à 12) est raccordé au dispositif de commande (6 à 9 et 13) pour mesurer une tension sur le dispositif de commutation mis hors tension, et
- le dispositif de commande (6 à 9 et 13) est conçu pour déterminer un passage par zéro du courant pour la commande à coupure de phase à l'aide de la tension mesurée.

2. Dispositif d'atténuation selon la revendication 1, qui présente une borne de conducteur extérieur (2) et une borne de conducteur neutre (4) comme entrée pour la tension d'alimentation ainsi qu'une borne de charge (3) pour raccorder le dispositif d'éclairage (1), dans lequel la borne de conducteur neutre (4) représente un autre raccord pour le dispositif d'éclairage (1).

3. Dispositif d'atténuation selon la revendication 2, dans lequel les deux dispositifs de commutation (6, 7) sont commutés en série entre la borne de conducteur extérieur (2) et la borne de charge (3).

4. Dispositif d'atténuation selon l'une des revendications précédentes, dans lequel chacun des dispositifs de commutation (6, 7) présente un transistor à effet de champ, et les deux transistors à effet de champ sont commutés d'une manière antisérielle.

5. Dispositif d'atténuation selon la revendication 4, dans lequel le dispositif de mesure (10 à 12) prélève la tension sur la section drain - source d'un au moins des deux transistors à effet de champ.

6. Dispositif d'atténuation selon l'une des revendications 2 à 4, dans lequel le dispositif de mesure (10 à 12) prélève la tension entre une prise centrale des deux dispositifs de commutation (6, 7) et la borne de conducteur neutre (4).

7. Dispositif d'atténuation selon l'une des revendications précédentes, dans lequel le dispositif d'éclairage (1) comprend une lampe à DEL qui peut être raccordée au dispositif d'atténuation.

8. Procédé pour commander la puissance d'un dispositif d'éclairage (1) alimenté en courant alternatif par
- application d'une tension d'alimentation alternative au dispositif d'éclairage (1) au moyen d'un commutateur bidirectionnel, qui présente deux dispositifs de commutation (6, 7),
- actionnement du dispositif d'éclairage (1) au moyen de la mise sous tension commune des deux dispositifs de commutation (6, 7) dans chaque demi-onde de la tension d'alimentation alternative **caractérisé par**
- la mise hors tension d'un des deux dispositifs de commutation (6, 7) avant un passage escompté par zéro du courant, dans lequel la mise hors tension du un dispositif de commutation (6, 7) est déclenchée en fonction d'un passage par zéro du courant déterminé en dernier ou en fonction d'un passage de tension par zéro de la tension d'alimentation,
- la mesure d'une tension sur le dispositif de commutation (6, 7) mis hors tension et
- la détermination d'un passage par zéro du courant pour la commande à coupure de phase à l'aide de la tension mesurée.
